## Europäisches Patentamt

(19) **European Patent Office**

**Office européen des brevets**

(11) Veröffentlichungsnummer: **0 214 656**
**B1**

(12) **EUROPÄISCHE PATENTSCHRIFT**

(45) Veröffentlichungstag der Patentschrift:
**24.05.89**

(21) Anmeldenummer: **86112516.9**

(22) Anmeldetag: **10.09.86**

(51) Int. Cl.⁴: **H04J 3/07**

(54) Übertragungsverfahren für ein Digitalsignal-Multiplexgerät.

(30) Priorität: **13.09.85 DE 3532793**

(43) Veröffentlichungstag der Anmeldung:
**18.03.87 Patentblatt 87/12**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**EP-A- 0 085 337**

**FREQUENZ, Band 32, Nr. 10, 1978, Seiten 281-287, Berlin, DE; F. KÜHNE et al.: "Positiv-Null-Negativ-Stopftechnik für die Multiplexübertragung plesiochroner Datensignale"**

(73) Patentinhaber: **Siemens Aktiengesellschaft Berlin und München, Wittelsbacherplatz 2, D-8000 München 2(DE)**

(72) Erfinder: **Müller, Martin, Dipl.-Ing., Knappertsbuschstrasse 18, D-8000 München 81(DE)**
Erfinder: **Schwierz, Theodor, Dipl.-Ing., Riedweg 11, D-8890 Aichach(DE)**

## Beschreibung

Die Erfindung betrifft ein Verfahren zur Digitalsignal-Übertragung gemäß dem Oberbegriff des Patentanspruchs 1.

Ein Digitalsignal-Multiplexgerät (siehe Zeitschrift Frequenz, 32 (1978) 10, Seiten 281-287, Positiv-Null-Negativ-Stopftechnik für die Multiplexübertragung plesiochroner Datensignale) faßt mehrere Digitalsignale einer Hierarchiestufe zu einem Digitalsignal der nächst höheren Hirarchiestufe zusammnen. Die Bitraten und die Pulsrahmen der Digitalsignale der einzelnen Hirarchiestufen sind in internationalen Vereinbarungen festgelegt. In allen Ebenen wird hierbei plesiochron übertragen, das heißt die Bitraten der Digitalsignale können von ihrem Nominalwert maximal um einen Toleranzwert nach oben oder nach unten abweichen. Die relativen Toleranzen sind ebenfalls festgelegt. Ein n-Kanal-Multiplexgerät für n plesiochrone Datensignale besteht aus einem Multiplexer, der die n Digitalsignale zu einem Multiplexsignal bündelt, und einen Demultiplexer, der das Multiplexsignal wieder in n Digitalsignale auflöst. Das Verfahren, mit dem die Bitraten der plesiochronen Digitalsignale an die Bitrate des Multiplexsignals angepaßt werden, ist als Impulsstopfen (puls-stuffing) bekannt. Ein bekanntes Verfahren ist hierzu das Positiv-Null-Negativ-Stopfen gemäß den CCITT-Empfehlungen G. 702.

Das Multiplexgerät für plesiochrone Digitalsignale besteht aus den kanalindividuellen Taktanpassungen und dem synchronen Multiplexer. Der synchrone Multiplexer stellt jedem der plesiochronen Kanäle zwei synchrone Kanäle zur Übertragung der Digitalsignale zur Verfügung, einen Hauptkanal, und einen Hilfskanal mit einer sehr viel kleineren Bitrate. Die Bitraten der Haupt- und Hilfskanäle stehen in einem festen rationalen Verhältnis zur Bitrate des Multiplexsignals.

Beim Positiv-Stopfen ist der Wert der Bitrate der Hauptkanäle höher als der Wert der Bitrate der Digitalsignale in den plesiochronen Kanälen. Die Taktanpassung eines Kanals übergibt das betreffende Digitalsignal Bit für Bit an den zugehörigen Hauptkanal, bis durch die Differenz der Bitraten eine Phasendifferenz von einer Bitperiode aufgelaufen ist. Dann fügt die Taktanpassung zu einem geeigneten Zeitpunkt ein Leerbit, das sogenannte Stopfbit in das Digitalsignal ein. Zugleich sendet die Taktanpassung eine Stopfinformation über den Hilfskanal. Die Stopfinformation gibt an, an welchen Stellen ein Stopfbit eingefügt wird.

Beim Negativ-Stopfen ist der Wert der Bitrate der Hauptkanäle niedriger als der Wert der Bitrate der Digitalsignale in den plesiochronen Kanälen. In diesem Fall wird zu einem geeigneten Zeitpunkt im Multiplexer ein Informationsbit aus dem Digitalsignal herausgenommen und über den Hilfskanal zusammen mit der Stopfinformation übertragen. Dieses Informationsbit wird im Demultiplexer wieder an der entsprechenden Stelle in das Digitalsignal eingefügt.

Der prinzipielle Aufbau von Multiplexgeräten, insbesondere des Senders, ist in den nachrichtentechnischen Fachberichten, 42 (1972), Seite 245-256, "Multiplexer für 8,448 Mbit/s bei Positiv-Negativ-Stopftechnik von U. Aßmus und anderen bechrieben. Der Sender enthält in einem zentralen Teil einen Taktgenerator zur Erzeugung der Multiplexfrequenz sowie Einrichtungen zur Rahmenerzeugung und Verschachtelung. Jedem Eingangssystem ist kanal-individuell ein Phasenvergleicher, ein Formatwandler, und eine Schaltung zur Auswahl der jeweils notwendigen Taktanpassungsinformation zugeordnet. Die Rahmenerzeugung gibt Rahmenworte ab, aufgrund derer das vom Multiplexer abgegebene Summensignal eine Rahmenstruktur aufweist.

Bei diesen bekannten Verfahren wird der Stopfbefehl bzw. die Stopfinformation über den Hilfskanal oder Zusatzkanal übertragen. Ein nicht erkannter Stopfbefehl führt empfangsseitig zu Bitwiederholung bzw. zu Bitverlust. Ein nicht erkannter Stopfbefehl hat daher eine länger dauernde Verschiebung der Daten um ein Bit und eine entsprechende Fehlerserie zur Folge. Bei Nichterkennung eines Stopfbefehls wegen gestörter Übertragung kann der Synchronverlust der Daten nur an der Verschiebung des Rahmenwortes erkannt werden

Der Erfindung liegt die Aufgabe zugrunde, ein Stopfverfahren anzugeben, bei dem längere Fehlerserien bei einer gestörten Übertragung vermieden werden.

Diese Aufgabe wird erfindungsgemäß durch die im Patentanspruch 1 angegebenen Merkmale gelöst.

Aus der DE-OS 32 01 965 ist ein digitales Nachrichtenübertragungssystem bekannt, bei dem auf der Sendeseite zwei plesiochrone Datensignale einschließlich ihrer Zusatz- oder Hilfssignale zu einem Multiplex- oder Summensignal zusammengefaßt werden. Hierbei enthält eines der Zusatzsignale die momentane Phasenbeziehung zwischen den beiden plesiochronen Bitfolgefrequenzen der Datensignale als binäre Phasenworte. Hierbei wird die Phasenbeziehung zur Regenerierung des plesiochronen Taktes auf der Empfangsseite der Übertragungsstrecke verwendet. Es ist zwar bekannt, Phasenworte zu übertragen; diese werden aber nicht als Stopfinformation verwendet. Die Folgefrequenz der Phasenworte im Zusatzkanal ist nicht so hoch gewählt, daß daraus Stopfbefehle abgeleitet werden können.

Bei dem erfindungsgemäßen Verfahren wird in vorteilhafter Weise ein Synchronisierungsverlust zwischen der Sende- und der Empfangsseite vermieden. In postalischen Netzen findet eine Neusynchroniserung relativ schnell statt, nicht aber in Netzen, bei denen verschlüsselt übertragen wird. Hier dauert eine Neusynchronisierung viel länger.

Bei einer vorteilhaften Weiterbildung des erfindungsgemäßen Verfahrens wird das höchstwertige Bit des Phasenwortes mehrfach übertragen. Diese Maßnahme dient der Erhöhung der Störsicherheit.

Im folgenden wird die Erfindung anhand eines in der Zeichnung dargestellten Ausführungsbeispieles näher erläutert.

In der Figur ist der sendeseitige Teil eines Multiplexgerätes MG dargestellt, das als zentrale Elemente einen Taktgeber TG, den eigentlichen Multiplexer M, und eine Rahmensynchronisierung RS

aufweist. Das Multiplexgerät MG enthält weiter eine Anpaßschaltung AN1, und weitere Anpaßschaltungen AN2 bis AN4, wobei alle Anpaßschaltungen AN1 bis AN4 identisch aufgebaut sind.

Die Anpaßschaltung AN1 weist einen Formatwandler FW, an dem ein plesiochrones Datensignal PD anliegt, einen Phasenvergleicher PV, an dem ein pelsiochroner Takt PD, und einen Zusatzmultiplexer ZM auf.

Ein vom Taktgeber abgegebener Zusatztakt ZT liegt an den Zusatzmultiplexern ZM der Anpaßschaltungen AN1 bis AN4 an, und ein ebenfalls vom Taktgeber TG abgegebener synchroner Takt ST liegt an den Formatwandlern FW und Phasenvergleichern PV der Anpaßschaltungen AN1 bis AN4 an.

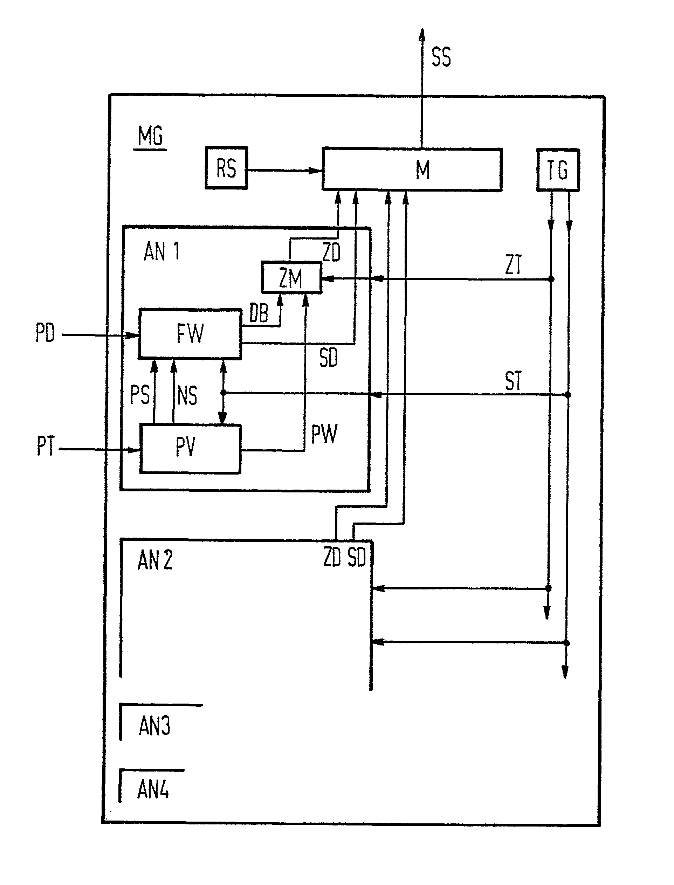

Der Phasenvergleicher PV enthält neben der üblichen Schaltungsanordnung die aus der DE-OS 32 01 965, Fig. 1 und zugehöriger Beschreibung bekannte Schaltungsanordnung. Der Phasenvergleicher PV erzeugt ein der Differenz zwischen dem plesiochronen Takt PT und den synchronen Takt ST entsprechendes Phasenwort PW, und gibt dieses in serieller Form an den Zusatzmultiplexer ZM. Zusätzlich gibt der Phasenvergleicher PV ein Positiv-Stopfsignal PS oder ein Negativ-Stopfsignal NS in an sich bekannter Weise an den Formatwandler FW (siehe hierzu die eingangs zitierte Zeitschrift Frequenz, Bild 4 und Seite 284).

Über die Anpaßschaltung AN1, das heißt über den Formatwandler FW wird aus dem plesiochronen Datensignal PD bitweise ein synchrones Datensignal SD erzeugt. Hierzu enthält beispielsweise der Formatwandler FW im wesentlichen einen Pufferspeicher, in den das plesiochrone Datensignal PD mit dem plesiochronen Takt PT bitweise eingeschrieben wird, und aus dem diese Bits mit dem synchronen Takt ST als synchrones Datensignal SD ausgelesen und an den Multiplexer M gegeben werden. (Siehe hierzu die eingangs angeführte Zeitschrift Frequenz, Bild 4 und Seite 283 und ff.). Wenn zwischem dem plesiochronen Datensignal PD und dem synchronen Datensignal SD eine Phasendifferenz von einer Bitlänge aufgelaufen ist, wird je nach dem, ob die Bitrate vom plesiochronen Datensignal PD geringer oder größer ist als die vom synchronen Datensignal SD, in die Bitfolge des synchronen Datensignals SD ein Lerrbit bzw. Stopfbit eingefügt oder ein Datenbit DB entnommen, das an den Zusatzmultiplexer ZM gegeben wird.

Wie schon ausgeführt wurde, wird im Phasenvergleicher PV im kurzen periodischen Abstand die Phase zwischen dem plesiochronen Takt PD und dem synchronen Takt SD gemessen, und das Phasenwort PW in serieller Form an den Zusatzmultiplexer ZM gegeben. Beim Positiv-Stopfen ist die Taktfrequenz des synchronen Taktes ST größer als die des plesiochronen Taktes PT. Das Phasenwort PW durchläuft hierbei zyklisch in aufsteigender Folge alle Werte von 00... bis 11.... (die Ziffer 0 bzw. 1 erscheinen hierbei n mal). Der Rücksprung von 11... auf 00... ist hierbei so gelegt, daß gleichzeitig mit ihm wegen der aufgelaufenen Phasendifferenz zwischen dem plesiochronen Datensignal PD und dem synchronen Datensignal SD ein Leerbit in das synchrone Datensignal SD eingefügt werden muß.

Beim Negativ-Stopfen wird der Wertebereich des Phasenwortes PW in absteigender Folge durchlaufen. Der Sprung von 00... nach 11... gibt dann an, daß dem plesiochronen Datensignal PD ein Datenbit DB entnommen werden muß.

Vom Zusatzmultiplexer ZM werden Zusatzdaten ZD an den Multiplexer M gegeben, die in ebenfalls verschachtelter Form das Phasenwort PW und das im Bedarfsfalle dem plesiochronen Datensignal PD entnommene Datenbit DB enthalten. Die Übergänge des Phasenwortes PW von 11... auf 00 ... bzw. 00... auf 11... stellen die Kommandos für Positiv-Stopfen bzw. Negativ-Stopfen dar, und können im Empfangsteil eines entsprechenden Multiplexgerätes ausgewertet werden.

Der Multiplexer M bildet aus den synchronen Daten SD und den Zusatzdaten ZD der Anpaßschaltungen AN1 bis AN4 und dem von der Rahmensynchronisierung RS abgegebenen Rahmenwort ein aus aufeinander folgenden Pulsrahmen bestehendes Summensignal SS, das beispielsweise über eine Richtfunkstrecke zum Empfangsteil eines Multiplexgerätes übertragen wird.

Im Summensignal SS wird das Phasenwort PW mit einer derart hohen Wiederholfrequenz bei feiner Wertstufung übertragen, daß sich zwei aufeinanderfolgende Phasenworte PW höchstens in der niederwertigsten Bitstelle unterscheiden. Hierdurch wird bewirkt, daß die Wiederholfrequenz der Stopfbefehle klein ist gegen die Wiederholfrequenz der Phasenworte PW. Ein einmal nicht erkannter bzw. bei der Übertragung verstümmelter Stopfbefehl (positiv bzw. negativ), d.h. Übergang des Phasenwortes PW vom Wert 00..00 zu dem Wert 11..11 bzw. umgekehrt, ist dann auch noch in dem Übergang der Phasenworte PW vom Wert 00..00 zu dem Wert 11..10 bzw.vom Wert 11..11 zu dem Wert 00..01 erkennbar. Auf diese Weise wird eine längere Fehlerserie der Bits des Datensignals sicher vermieden.

Um eine hohe Sicherheit der Übertragung zu gewährleisten, wird das höchstwertige Bit des Phasenwortes PW zusätzlich mehrfach übertragen.

Beispielsweise besteht das Phasenwort aus 6 Bits, wobei das höchstwertige Bit 3-fach übertragen wird.

Bezugszeichenliste

MG Multiplexgerät
FW Formatwandler
M Multiplexer
TG Taktgeber
PD plesiochrones Datensignal
SD synchrones Datensignal
PT plesiochroner Takt
ST synchroner Takt
DB Datenbit
ZD Zusatzdaten
ZT Zusatztakt
ZM Zusatzmultiplexer
PV Phasenvergleicher
PW Phasenwort
PS Positiv-Stopfsignal
NS Negativ-Stopfsignal
AN 1-4 Anpaßschaltungen RS Rahmensynchronisierung
SS Summensignal

## Patentansprüche

1. Verfahren zur Digitalsignal-Übertragung unter Anwendung des sogenannten Puls-Stuffing, bei dem mehrere Eingangskanäle mit plesiochronen Daten (PD) zusammen mit einer Synchronisierinformation zu einem Summensignalkanal zusammengefaßt werden, wobei gemäß dem Puls-Stuffing jeweils die plesiochronen Daten (PD) in einem Hauptkanal als Synchrondaten (SD) und in einem Hilfskanal des Summensignalkanals als Zusatzdaten (ZD) zusammen mit einer Stopfinformation übertragen werden,
dadurch gekennzeichnet ,
daß die Stopfinformation ausschließlich aus Phasenworten (PW) besteht, die in digitaler Form die momentane Phasenbeziehung zwischen dem Summensignal (SS) und den plesiochronen Daten (PD) enthalten, wobei die Folgefrequenz der Phasenworte (PW) im Summensignalkanal so hoch gewählt ist, daß sich zwei aufeinanderfolgende Phasenworte (PW) höchstens im niederwertigsten Bit unterscheiden können.

2. Verfahren nach Anspruch 1,
dadurch gekennzeichnet ,
daß das höchstwertige Bit des Phasenwortes (PW) mehrfach übertragen wird.

3. Schaltungsanordnung zur Durchführung des Stopfverfahrens nach einem der vorhergehenden Ansprüche, mit einem Multiplexer (M) und kanal-individuellen Anpaßschaltungen (AN1 bis AN4), bei denen jeweils in einem Formatwandler (FW) die plesiochronen Daten (PD) in synchrone Daten (SD) umgesetzt werden, und bei denen jeweils in einem Phasenvergleicher (PV) Stopfkommandos erzeugt werden,
dadurch gekennzeichnet,
daß die Phasenvergleicher (PV) derart ausgebildet sind, daß sie die Phasenworte (PW) erzeugen, und daß in jeder der Anpaßschaltungen (AN1 bis AN4) ein Zusatzmultiplexer (ZM) vorgesehen ist, der die bedarfsweise im Formatwandler (FW) ausgefügten Datenbits (DB) mit den Phasenworten (PW) zu Zusatzdaten (ZD) zusammenfaßt und an den Multiplexer (M) gibt.

4. Schaltungsanordnung nach Anspruch 3,
dadurch gekennzeichnet ,
daß der Phasenvergleicher (PV) derart ausgebildet ist, daß er das höchstwertige Bit des Phasenwortes (PW) mehrfach abgibt.

5. Schaltungsanodnung nach Anspruch 4,
dadurch gekennzeichnet ,
daß der Phasenvergleicher (PV) das höchstwertige Bit des Phasenwortes (PW) dreifach abgibt, wobei das Phasenwort (PW) bei einer Wertstufung von 24 aus sechs Bits besteht.

## Claims

1. Method for transmitting digital signals using so-called pulse stuffing, in which a plurality of input channels with plesiochronous data (PD) are combined with synchronization information to form a composite signal channel, in each case, in accordance with pulse stuffing, the plesiochronous data (PD) being transmitted in a main channel as synchronous data (SD) and in an auxiliary channel of the composite signal channel as additional data (ZD) together with stuffing information, characterized in that the stuffing information consists solely of phase words (PW) which contain in digital form the momentary phase relationship between the composite signal (SS) and the plesiochronous data (PD), the repetition frequency of the phase words (PW) in the composite signal channel being selected to be so great that two successive phase words (PW) can differ at most in the least significant bit.

2. Method according to Claim 1, characterized in that the most significant bit of the phase word (PW) is transmitted several times.

3. Circuit arrangement for carrying out the stuffing method according to one of the preceeding claims, having a multiplexer (M) and channel-specific matching circuits (AN1 to AN4), in which the plesiochronous data (PD) are converted into synchronous data (SD) in each case in a format converter (FW) and in which stuffing commands are generated in each case in a phase comparator (PV), characterized in that the phase comparators (PV) are designed such that they generate the phase words (PW), and in that there is provided in each of the matching circuits (AN1 to AN4) an additional multiplexer (ZM) which combines the data bits (DB) deleted as required in the format converter (FW) with the phase words (PW) to form additional data (ZD) and sends them to the multiplexer (M).

4. Circuit arrangement according to Claim 3, characterized in that the phase comparator (PV) is designed such that it outputs the most significant bit of the phase word (PW) several times.

5. Circuit arrangement according to Claim 4, characterized in that the phase comparator (PV) outputs the most significant bit of the phase word (PW) three times, the phase word (PW) consisting of six bits at a value level of 24.

## Revendications

1. Procédé de transmission de signaux numériques moyennant l'utilisation de ce qu'on appelle un bourrage d'impulsions, selon lequel on réunit plusieurs canaux d'entrée contenant des données plésiochrones (PD) et une information de synchronisation pour former un canal de transmission d'un signal somme, les données plésiochrones (PD) étant transmises respectivement, conformément au bourrage d'impulsions, dans un canal principal sous la forme de données synchrones (SD) et, dans un canal auxiliaire du canal de transmission du signal somme, sous la forme de données additionnelles (ZD) conjointement avec une information relative au bourrage, caractérisé par le fait que l'information de bourrage est constituée exclusivement par des mots de phase (PW), qui contiennent sous forme numérique la relation de phase instantanée entre le signal somme (SS) et les données plésiochrones (PD), la fréquence de récurrence des mots de phase (PW) dans le canal de transmission du signal somme étant choisie suffisamment élevée pour pouvoir différencier deux mots de phase (PW) successifs au maximum dans le bit de poids le plus faible.

2. Procédé suivant la revendication 1, caractérisé par le fait que le bit de poids le plus élevé du mot de phase (PW) est transmis plusieurs fois.

3. Montage pour la mise en oeuvre du procédé de bourrage suivant l'une des revendications précédentes, comportant un multiplexeur (M) et des circuits d'adaptation (AN1 à AN4), qui sont prévus individuellement pour les canaux et dans lesquels les données plésiochrones (PD) sont converties en données synchrones (SD) respectivement dans un convertisseur de format (FW), et dans lesquels les ordres de bourrage sont produits respectivement dans un comparateur de phase (PV), caractérisé par le fait que les comparateurs de phase (PV) sont agencés de manière à produire les mots de phase (PW), et que dans chacun des circuits d'adaptation (AN1 à AN4) il est prévu un multiplexeur additionnel (ZM), qui rassemble les bits de données (DB), obtenus le cas échéant dans le convertisseur de format (FW), en des mots de phase (PW) pour former des données additionnelles (ZD) et envoie ces dernières au multiplexeur (M).

4. Montage suivant la revendication 3, caractérisé par le fait que le comparateur de phase (PV) est agencé de telle sorte qu'il délivre plusieurs fois le bit de poids supérieur du mot de phase (PW).

5. Montage suivant la revendication 4, caractérisé par le fait que le comparateur de phase (PV) délivre trois fois le bit de poids supérieur du mot de phase (PW), ce dernier étant constitué par six bits dans le cas d'un échelonnement de 24 des valeurs.